# EUROPEAN PATENT APPLICATION

(11) **EP 4 557 496 A1**
(43) Date of publication of application: **21.05.2025**
(21) Application number: 24850252.8
(22) Date of filing: 05.09.2024
(51) Int. Cl.: H01M 50/533, H01M 50/572

(54) **PIN FIXING STRUCTURE AND BATTERY**

(30) Priority: 07.09.2023 CN 202322429528 U
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN)
(72) Inventor: LIN, Zhibing, Huizhou, Guangdong 516039 (CN); AN, Suli, Huizhou, Guangdong 516039 (CN); SHU, Kuanjin, Huizhou, Guangdong 516039 (CN)
(74) Representative: Zacco GmbH
(86) International application number: PCT/CN2024/117262
(87) International publication number: WO 2025/051206

(57) **Abstract**

The present invention provides a pin fixing structure and a battery. The pin fixing structure includes a lower plastic member, a stop member and a pin, the lower plastic member is provided with a positioning groove, and an opening is provided at an end of the positioning groove; the stop member is provided on an inner side wall of the positioning groove, and the stop member extends along a first direction; the pin includes a connecting plate and a pin body; and when the connecting plate is inserted into the positioning groove through the opening, the stop member abuts against the connecting plate. The pin fixing structure in the present invention is able to result in higher safety of the battery assembling process.

## Description

The present invention claims the priority of Chinese Patent Application No. 202322429528.8, filed with the China National Intellectual Property Administration (CNIPA) on September 07, 2023, and entitled "Pin Fixing Structure and Battery", which is incorporated in its entirety herein by reference.

### Technical Field

The present invention relates to the technical field of batteries, and in particular to a pin fixing structure and a battery.

### Background

A pin of a battery includes a connecting plate and a pin body connected in a bent manner, and the connecting plate is welded to a terminal post mounted on a lower plastic member of the battery to fix the pin; and a tab on a battery cell pack inside the battery are connected to the pin body to achieve an electric connection between the pin and the battery cell pack.

### Technical Problem

However, after the tab is welded to the pin body and before the battery cell pack and the pin are integrally mounted into a casing of the battery, because the battery cell pack is heavy and a thickness of the connecting plate is thin, the connecting plate is likely to warp and deform under the influence of gravity of the battery cell pack, causing the pin body to shift; on the one hand, the tab is pulled and fractured, leading to short circuits, fire, or even explosion in the battery cell pack, and resulting in lower safety; on the other hand, the pin body detaches from a protective film adhered to the outside of the pin body, or the pin body punctures the protective film, so that the protection effect on the pin body cannot be guaranteed.

### Technical Solution

The present invention provides a pin fixing structure and a battery.

Some embodiments of the present invention provide a pin fixing structure, including:
a lower plastic member, the lower plastic member being provided with a positioning groove, and an opening being provided at an end of the positioning groove;
a stop member provided on an inner side wall, adjacent to the opening, of the positioning groove and extending along a first direction; and
a pin, the pin including a connecting plate and a pin body connected in a bent manner, when the connecting plate is inserted into the positioning groove through the opening along a second direction, the stop member abuts against the connecting plate, and the first direction is perpendicular to the second direction.

Some other embodiments of the present invention provide a battery, including the pin fixing structure in the present invention.

### Beneficial Effect

In the present invention, the positioning groove with the opening is provided on the lower plastic member, and the stop member is arranged on the inner side wall, adjacent to the opening, of the positioning groove; when the connecting plate is inserted into the positioning groove through the opening along the second direction, the stop member is able to directly abut against the connecting plate, so that the stop member provides support for the connecting plate; compared with the related art in which the connecting plate is fixed solely by welding, the added stop member offers auxiliary support to the connecting plate, effectively preventing the connecting plate from warping or deforming under the influence of gravity of the battery cell pack, thus causing the pin body to shift; on the one hand, the tab is prevented from being pulled and fractured, thereby reducing the likelihood of short circuits, fire, and even explosion in the battery cell pack, and resulting in higher safety; on the other hand, the pin body is prevented from detaching from the protective film adhered to the outside of the pin body and from puncturing the protective film, thereby ensuring the protection effect of the protective film on the pin body.

The battery in the present invention includes the pin fixing structure in the present invention, which helps to prevent the pin body from shifting during the battery assembly process, ensuring good performance of the tab and the protective film, thereby ensuring higher safety during the battery assembly process.

### Brief Description of the Drawings

Fig. 1 is a structural schematic diagram of a pin fixing structure in some embodiments;
Fig. 2 is a structural schematic diagram of a pin not inserted into a positioning groove in some embodiments;
Fig. 3 is a structural schematic diagram of a lower plastic member and a stop member in some embodiments;
Fig. 4 is a structural schematic diagram of a tab and a pin body before welding in some embodiments; and
Fig. 5 is a structural schematic diagram of a tab and a pin body after welding in some embodiments;

Descriptions of the reference signs:
1-lower plastic member; 11-lower surface; 12-positioning groove; 121-opening;
2-stop member; 21-first stop plate;
3-pin; 31-connecting plate; 311-welding portion; 312-abutting portion; 32-pin body; 321-first flat plate; 322-second flat plate; 323-intermediate plate;
4-battery cell pack; 41-tab; 5-terminal post.

### Detailed Description of the Embodiments

Some embodiments provide a pin fixing structure and a battery including the pin fixing structure. The battery further includes a battery cell pack and a casing, both the battery cell pack and the pin fixing structure are encapsulated within the casing. A tab on the battery cell pack is electrically connected to the pin fixing structure, thereby allowing an electricity of the battery cell pack to be led out of the battery through the pin fixing structure.

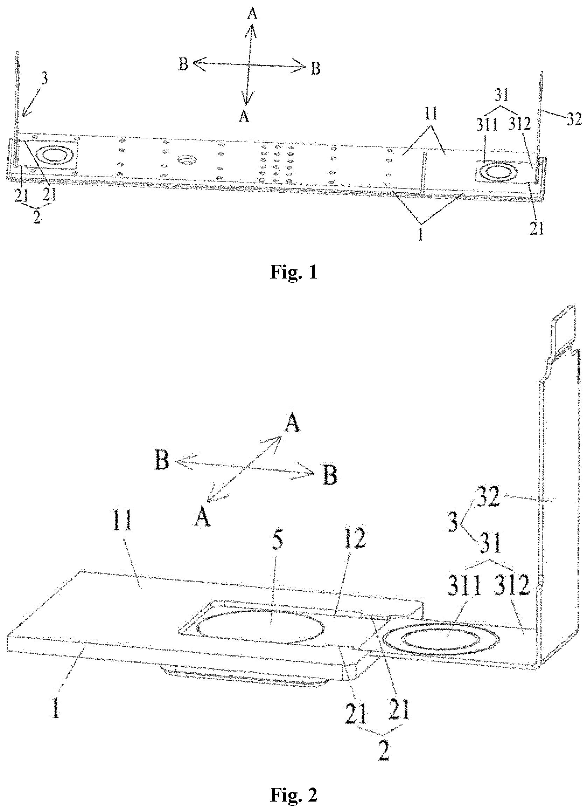

Specifically, as shown in Figs. 1-3, the pin fixing structure includes a lower plastic member 1, a stop member 2 and a pin 3, wherein a positioning groove 12 is provided in a lower surface 11 of the lower plastic member 1, and an opening 121 is provided at an end of the positioning groove 12; the stop member 2 is provided on an inner side wall, adjacent to the opening 121, of the positioning groove 12, and the stop member 2 extends along a first direction; the pin 3 includes a connecting plate 31 and a pin body 32 connected in a bent manner, the connecting plate 31 is arranged horizontally, the pin body 32 is arranged vertically downward, and a tab 41 on a battery cell pack 4 is electrically connected to the pin body 32 of the pin fixing structure; and when the connecting plate 31 is inserted into the positioning groove 12 through the opening 121 along a second direction, the stop member 2 abuts against the connecting plate 31. The first direction is perpendicular to the second direction. The first direction is specifically shown as an arrow A in Figs. 1-2, and the second direction is specifically shown as an arrow B in Figs. 1-2.

Compared with the related art, in the pin fixing structure of the embodiment, the stop member 2 is additionally arranged on the inner side wall, adjacent to the opening 121, of the positioning groove 12; when the connecting plate 31 is inserted into the positioning groove 12 through the opening 121 along the second direction, the stop member 2 is able to directly abut against the connecting plate 31, so that the stop member 2 provides support for the connecting plate 31; compared with the related art in which the connecting plate 31 is fixed only by welding, the added stop member 2 offers auxiliary support to the connecting plate 31, effectively preventing the connecting plate 31 from warping or deforming under the influence of gravity of the battery cell packs 4, thus causing the pin body 32 to shift; on the one hand, the tab 41 is able to be prevented from being pulled and fractured, thereby reducing the likelihood of short circuits, fire, and even explosion in the battery cell pack 4, and resulting in higher safety; on the other hand, the pin body 32 is prevented from detaching from the protective film adhered to the outside of the pin body 32, and the pin body 32 is prevented from puncturing the protective film, thereby ensuring the protection effect of the protective film on the pin body 32.

The battery in the present invention includes the pin fixing structure of the embodiment, which is able to prevent the pin body 32 from shifting during the battery assembly process, ensuring good performance of the tab 41 and the protective film, thereby ensuring higher safety during the battery assembly process.

In an embodiment, the connecting plate 31 includes a welding portion 311 and an abutting portion 312, and the abutting portion 312 is located between the welding portion 311 and the pin body 32; when the connecting plate 31 is inserted into the positioning groove 12 through the opening 121 along the second direction, the stop member 2 directly abuts against the abutting portion 312 of the connecting plate 31, and the welding portion 311 is configured to be welded to a terminal post 5 on the lower plastic member 1, so that the connecting plate 31 is able to be fixed on the lower plastic member 1 by welding, thereby ensuring the auxiliary supporting effect of the stop member 2 on the connecting plate 31.

It should be noted that, because a thickness of the connecting plate 31 is thin, in the embodiment, laser penetration welding is used between the welding portion 311 and the terminal post 5 to increase a welding area between the welding portion 311 and the terminal post 5, ensuring that a connection between the connecting plate 31 and the terminal post 5 is relatively stable, thereby ensuring that the connecting plate 31 is effectively fixed on the lower plastic member 1, and more effectively preventing deformation of the connecting plate 31.

Specifically, since the tab 41 is connected to the pin body 32, under an influence of gravity of the battery cell pack 4, deformation is more likely to occur to a part of the abutting portion 312 near a connection between the abutting portion 312 and the pin body 32; therefore, as shown in Figs. 1-3, the stop member 2 is arranged close to a bent connection between the abutting portion 312 of the connecting plate 31 and the pin body 32, so that the stop member 2 is able to support a portion on the abutting portion 312 that is more prone to deformation, thereby ensuring a better supporting effect on the connecting plate 31, and better preventing deformation of the connecting plate 31.

In an embodiment, at least one stop member 2 is provided, so that a plurality of stop members 2 are able to be provided to ensure a better abutting and supporting effect on the abutting portion 312, thereby preventing deformation of the connecting plate 31. In the embodiment, as shown in Figs. 1-3, one stop member 2 is provided, the specific number of the stop member 2 is not limited and should be determined according to a specific structure of the lower plastic member 1 and the supporting and fixing requirements of the connecting plate 31.

Specifically, a distance between a bottom end surface of the stop member 2 and a groove bottom of the positioning groove 12 is greater than a thickness of the connecting plate 31 by 0.1 mm to 0.2 mm, so that the connecting plate 31 is able to be smoothly inserted into the positioning groove 12, thereby avoiding interference of the stop member 2 with the insertion of the connecting plate 31.

In an embodiment, as shown in Figs. 1-3, a top end surface of the stop member 2 is flush with a top end surface of the positioning groove 12 and a lower surface 11 of the lower plastic member 1, so that the lower surface 11 of the lower plastic member 1 has a better flatness, and the lower plastic member 1 has a relatively attractive appearance. It should be noted that the bottom end surface and the top end surface involved in the embodiment specifically refer to a placement manner of the lower plastic member 1 in Fig. 2.

Specifically, a width of the stop member 2 in the second direction is 5 mm to 20 mm, so that an abutting and supporting function of the stop member 2 on the abutting portion 312 is able to be ensured, and a manufacturing cost of the stop member 2 is able to be saved.

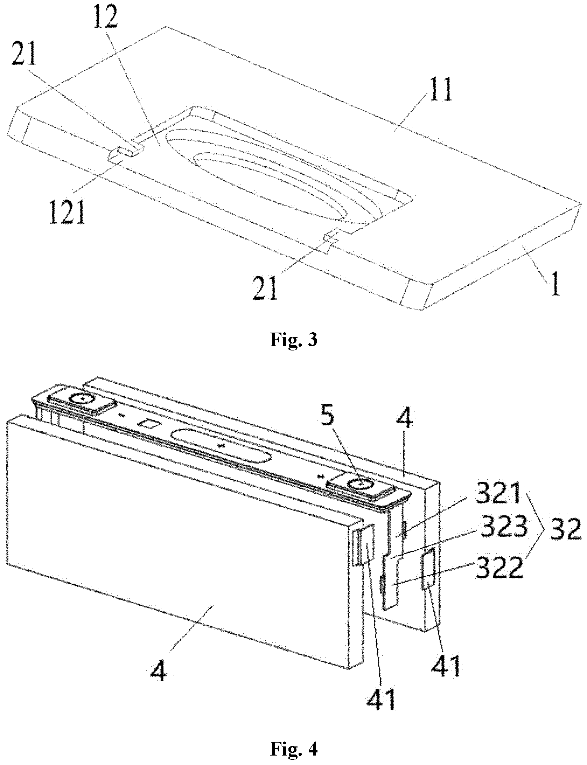

In the embodiment, as shown in Fig. 3, the stop member 2 and the lower plastic member 1 are an integral injection-molded structure. On the one hand, a processing of the stop member 2 is able to be simple and convenient, and on the other hand, a stability of a connection between the stop member 2 and the lower plastic member 1 is able to be ensured, thereby preventing the stop member 2 from falling off the lower plastic member 1.

In an embodiment, as shown in Figs. 1-3, the stop member 2 includes two first stop plates 21, the two first stop plates 21 are arranged oppositely along a straight line, and the first stop plates 21 extend along the first direction; one end of one of the two first stop plates 21 is arranged on one inner side wall of the positioning groove 12, and the other end is a free end; one end of the other one of the two first stop plates 21 is arranged on the other inner side wall of the positioning groove 12, and the other end is a free end; and a spacing distance between the two free ends of the two first stop plates 21 is large, so that lengths of the two first stop plates 21 are short.

By providing the two first stop plates 21, the two first stop plates 21 are able to simultaneously abut against and support the abutting portion 312, thereby achieving a better supporting effect on the connecting plate 31; in addition, the two short first stop plates 21 are provided to ensure the supporting effect of the first stop plates 21 on the abutting portion 312 and to save the manufacturing cost of the first stop plates 21. A length of each of the two first stop plate 21 along the first direction is 10 mm to 30 mm.

In other embodiments, the stop member 2 also includes a second stop plate, both ends of the second stop plate are respectively arranged on two opposite inner side walls, adjacent to the opening 121, of the positioning groove 12, the second stop plate extends along the first direction, i.e., the second stop plate of an integral structure passes through the positioning groove 12 along the first direction.

By providing the second stop plate of an integral structure, an abutting area between the second stop plate and the abutting portion 312 is able to be increased, so that the supporting effect on the abutting portion 312 is able to be ensured, thereby better preventing deformation of the connecting plate 31.

Currently, the adopted pin body is a plate-like structure that extends along the second direction. The pin body and the tab connected thereto need to be flattened as a whole after the tab is bent and welded onto the pin body, so as to facilitate encapsulation of the battery cell pack and the pin fixing structure as a whole into the casing. However, the tab need to be bent twice, and during the second bending, due to an influence of the pin body, the tab is easily inserted too deeply back into the battery cell pack and contacts the tab with an opposite polarity within the battery cell pack in the process of the second bending, resulting in a short circuit due to a direction connection between the positive tab and the negative tab in the battery cell pack, thereby resulting in lower safety.

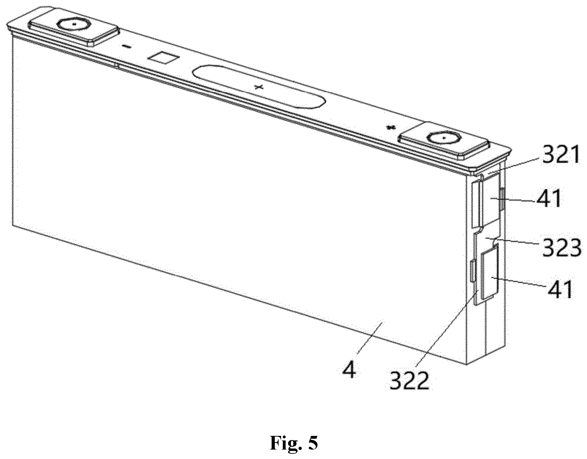

As shown in Figs. 4-5, the pin body 32 in the embodiment is a flat plate that extends along a vertical direction, and is not provided with a structure extending along the second direction, and the tab 41 of the battery cell pack 4 is bent and directly welded onto the flat plate; that is, according to the pin body 32 adopting the flat plate structure, the tab 41 only needs to be bent once and then welded onto the pin body 32, and there is no need to flatten the tab 41 and the pin body 32 as a whole. In the embodiment, laser welding is used between the tab 41 and the pin body 32, which reduces a number of welding steps and simplifies a welding manner.

By providing the pin body 32 as the flat plate extending along the vertical direction, on the one hand, the tab 41 is able to be prevented from being reversely inserted back into the battery cell pack 4 too deeply in the process of flattening the pin body 32 and contacting the tab 41 with the opposite polarity in the battery cell pack 4, thereby preventing a short circuit due to a direct connection between the positive tab 41 and the negative tab 41 within the battery cell pack 4, and resulting in higher safety; on the other hand, the number of bending times of the tab 41 is able to be reduced, so that a phenomenon of tearing of the tab 41 during multiple bending processes is able to be reduced, and the tab 41 is able to be protected well; meanwhile, because a step of flattening during a process of welding the tab 41 is simplified, the production cost is able to be reduced; and furthermore, the pin body 32 has a simpler structure, and raw materials for manufacturing the pin body 32 is able to be saved. In the embodiment, a length of the pin body 32 along the vertical direction is 40 mm to 80 mm, and a width of the pin body 32 along the first direction is 10 mm to 16 mm.

In an embodiment, as shown in Figs. 4-5, each of two opposite sides of the pin body 32 along the first direction is provided with the battery cell pack 4, thereby forming a structure having double battery cell packs 4; the flat plate specifically includes a first flat plate 321 and a second flat plate 322 which are parallel to each other, and an intermediate plate 323 is connected between the first flat plate 321 and the second flat plate 322, such that the pin body 32 is able to form a Z-shaped structure; and the first flat plate 321 is configured for welding the tab 41 of one of the two battery cell packs 4, and the second flat plate 322 is configured for welding the tab 41 of the other one of the two battery cell packs 4.

The pin body 32 is provided as the Z-shaped structure, so that the pin body 32 is able to match a welding position of the tab 41 on the battery cell pack 4 at two sides respectively, thereby ensuring that the tabs 41 on the two battery cell packs 4 are able to be smoothly welded to one pin body 32, ensuring that two tabs 41 welded to one pin body 32 do not interfere with each other, and ensuring a safety of welding the tab 41.

In the embodiment, the pin fixing structure is provided with the stop member 2, which is able to increase a supporting effect on the connecting plate 31 and prevent deformation of the connecting plate 31, so that good usage performance of the protective film on the tab 41 and the pin body 32 is able to be ensured, thereby ensuring higher safety during the battery assembly process; meanwhile, the pin body 32 is provided as the flat plate extending along the vertical direction, so that the number of bending times of the tab 41 is reduced, and the short circuit of the battery caused by the tabs 41 in a process of bending the pin body 32 twice is avoided, thereby ensuring safety of the battery assembling process.

## Claims

1. A pin fixing structure, comprising:
a lower plastic member (1), wherein the lower plastic member (1) is provided with a positioning groove (12), and an opening (121) is provided at an end of the positioning groove (12);
a stop member (2), wherein the stop member (2) is provided on an inner side wall, adjacent to the opening (121), of the positioning groove (12), and the stop member (2) extends along a first direction; and
a pin (3), wherein the pin (3) comprises a connecting plate (31) and a pin body (32) connected in a bent manner; and when the connecting plate (31) is inserted into the positioning groove (12) through the opening (121) along a second direction, the stop member (2) abuts against the connecting plate (31), and the first direction is perpendicular to the second direction.

2. The pin fixing structure as claimed in claim 1, wherein the stop member (2) comprises two first stop plates (21), and the two first stop plates (21) are arranged oppositely;
one end of one of the two first stop plates (21) is arranged on one inner side wall of the positioning groove (12), and the other end is a free end; and
one end of the other one of the two first stop plates (21) is arranged on the other inner side wall of the positioning groove (12), the other end is a free end.

3. The pin fixing structure as claimed in claim 2, wherein a length of each of the two first stop plates (21) along the first direction is 10 mm to 30 mm.

4. The pin fixing structure as claimed in claim 1, wherein the stop member (2) comprises:
a second stop plate, both ends of the second stop plate are respectively arranged on two opposite inner side walls, adjacent to the opening (121), of the positioning groove (12).

5. The pin fixing structure as claimed in any one of claims 1-4, wherein the stop member (2) is arranged close to a bent connection between the connecting plate (31) and the pin body (32), and at least one stop member (2) is provided.

6. The pin fixing structure as claimed in any one of claims 1-4, wherein a distance between a bottom end surface of the stop member (2) and a groove bottom of the positioning groove (12) is greater than a thickness of the connecting plate (31) by 0.1 mm to 0.2 mm.

7. The pin fixing structure as claimed in any one of claims 1-4, wherein a top end surface of the stop member (2) is flush with a top end surface of the positioning groove (12) and a lower surface (11) of the lower plastic member (1).

8. The pin fixing structure as claimed in any one of claims 1-4, wherein the stop member (2) and the lower plastic member (1) are an integral injection-molded structure.

9. The pin fixing structure as claimed in any one of claims 1-4, wherein the pin body (32) is a flat plate extending along a vertical direction, and a tab (41) of a battery cell pack (4) is welded to the flat plate.

10. The pin fixing structure as claimed in claim 9, wherein each of two opposite sides of the pin body (32) along the first direction is provided with the battery cell pack (4); and the flat plate include:
a first flat plate (321) and a second flat plate (322) which are parallel to each other; an intermediate plate (323) is connected between the first flat plate (321) and the second flat plate (322), such that the pin body (32) forms a Z-shaped structure, the first flat plate (321) is configured for welding the tab (41) of one of the two battery cell packs (4), and the second flat plate (322) is configured for welding the tab (41) of the other one of the two battery cell packs (4).

11. The pin fixing structure as claimed in any one of claims 1-4, wherein the connecting plate (31) comprises a welding portion (311) and an abutting portion (312), the abutting portion (312) is positioned between the welding portion (311) and the pin body (32), the welding portion (311) is configured to be welded to a terminal post (5) on the lower plastic member (1), and the stop member (2) abuts against the abutting portion (312).

12. The pin fixing structure as claimed in any one of claims 1-4, wherein a width of the stop member (2) along the second direction is 5 mm to 20 mm.

13. The pin fixing structure as claimed in any one of claims 1-4, wherein a length of the pin body (32) along a vertical direction is 40 mm to 80 mm, and a width of the pin body (32) along the first direction is 10 mm to 16 mm.

14. A battery, comprising the pin fixing structure as claimed in any one of claims 1-13.
